## Europäisches Patentamt

## European Patent Office

## Office européen des brevets

(19)

(11) Veröffentlichungsnummer: **0 142 676**
**B1**

(12) # EUROPÄISCHE PATENTSCHRIFT

(45) Veröffentlichungstag der Patentschrift:
**10.05.89**

(51) Int. Cl.⁴: **G 01 D 5/20**, G 01 P 3/487

(21) Anmeldenummer: **84111385.5**

(22) Anmeldetag: **25.09.84**

(54) **Spulensystem zur induktiven Abtastung der Bewegungsgeschwindigkeit eines magnetisierten Körpers.**

(30) Priorität: **26.09.83 DE 3334750**

(43) Veröffentlichungstag der Anmeldung:
**29.05.85 Patentblatt 85/22**

(45) Bekanntmachung des Hinweises auf die Patenterteilung:
**10.05.89 Patentblatt 89/19**

(84) Benannte Vertragsstaaten:
**AT BE CH FR GB IT LI NL SE**

(56) Entgegenhaltungen:
**DE-A-2 930 223**
**DE-B-2 738 011**

**Vacuum vol. 32, number 10/11; p 685-690, 1982**
**J.V.Fremerey: Spinning Rotor Vacuum Gauges**

(73) Patentinhaber: **Kernforschungsanlage Jülich Gesellschaft mit beschränkter Haftung, Postfach 1913, D-5170 Jülich 1 (DE)**

(72) Erfinder: **Fremerey, Johan K. Dr., Mönkemöllerstrasse 19, D-5300 Bonn 1 (DE)**
Erfinder: **Lindenau, Bernd, Siemensstrasse 6, D-5170 Jülich (DE)**

## Beschreibung

Die Erfindung bezieht sich auf ein Spulensystem zur induktiven Abtastung der Bewegungsgeschwindigkeit eines zumindest in Teilbereichen magnetisierten Körpers. Die Merkmale des Spulensystems, von dem die Erfindung ausgeht, sind im Oberbegriff des Patentanspruches 1 angegeben. Ein der Erfindung insoweit am nächsten liegendes Spulensystem ist aus der Druckschrift Vacuum, 1982, Band 32, S. 685 ff., J. K. Fremerey, "Spinning rotor vacuum gauges", (1), bekannt.

Spulensysteme der genannten Art werden insbesondere zur seitlichen Stabilisierung von magnetisch gelagerten Rotoren in Gasreibungsvakuummetern eingesetzt, vgl. beispielsweise neben der vorgenannten Druckschrift (1) auch Journal of Vacuum Science and Technology, Band 9, (1972), Seite 108, (2) sowie auch zur Abtastung der Drehfrequenz solcher Rotoren verwendet, vgl. Druckschriften (1) und (2) und Proc. of the 7th International Vacuum Congress, Wien 1977, Band 1, Seite 157, (3). Die vorgenannten Rotoren sind im wesentlichen parallel zur Rotationsachse magnetisiert. Die Anwendung der Spulensysteme ist jedoch nicht auf die Abtastung von Bewegungsgeschwindigkeiten rotierender Körper beschränkt. Auch die Abtastung translatorischer Bewegungsgeschwindigkeiten eines nicht rotierenden magnetisierten Körpers sind möglich. Der Begriff "Rotationsachse" dient lediglich zur Feststellung einer Bezugsrichtung für Magnetisierung und Spulenanordnung.

Ein Nachteil der in den vorgenannten Druckschriften (1) bis (3) beschriebenen Spulensysteme besteht darin, daß sie nicht nur auf jeweils diejenige Bewegung des Rotors, ansprechen, die abgetastet werden soll, sondern gleichzeitig auch auf andere Bewegungen, wobei grundsätzlich störende Überlagerungen des gewünschten Abtastsignals entstehen. In manchen Fällen ist die Anordnung von Kompensationsspulen erforderlich, um ein brauchbares Abtastsignal zu gewinnen. So sind beispielsweise zur Abtastung von seitlichen Rotorbewegungen entlang einer Bewegungskoordinate senkrecht zur Rotationsachse bei dem in (2) beschriebenen magnetisch gelagerten Rotor insgesamt vier Spulen vorgesehen, von denen zwei lediglich dazu dienen, die durch Bewegungen eines in der Nähe des Rotors angeordneten Magneten induzierten Spannungen zu kompensieren. Die räumliche Anordnung und Dimensionierung dieser Kompensationsspulen muß sehr genau auf die gegebene Anordnung von Rotor und Magnet abgestimmt sein, damit die erforderliche Kompensation hinreichend gegeben ist. Eine solche Spulenkombination ist jedoch wegen ihrer speziellen Abstimmung auf den störenden Magneten nicht in der Lage, Induktionsspannungen auszugleichen, die von anderen Störquellen herrühren. Beispielsweise würde die Kompensation von Wechselfeld-Induktionsspannungen, wie sie üblicherweise in der Nähe von elektromotorisch angetriebenen Vakuumpumpen in erhöhtem Maße auftreten, in dem hier beschriebenen Fall mindestens eine weitere Kompensationsspule erforderlich machen. Selbst dieses dann bereits aus fünf Spulen bestehende Spulensystem wäre noch empfindlich gegenüber Bewegungen des magnetisierten Rotors in Richtung der Rotationsachse, und auch die Drehfrequenz des Rotors um die Rotationsachse würde zusätzlich überlagerte Störspannungen erzeugen, wenn nicht entsprechende weitere Kompensationsspulen hinzugefügt, oder andere Maßnahmen zur Unterdrückung der Störsignale ergriffen werden würden. Die bisher beschriebenen Schwierigkeiten bei der Ausbildung eines störunempfindlichen Spulensystems beziehen sich nur auf das Abtasten induzierter Spannungen durch Bewegungen in einer Bewegungskoordinate. Entsprechender Aufwand an Kompensationen müßte bei bekannten Spulenanordnungen für das Abtasten jeder Bewegungskoordinate angewandt werden.

Aufgabe der Erfindung ist es, ein Spulensystem der eingangs genannten Art zu finden, welches mit einem Minimalaufwand an Einzelspulen die Abtastung der Bewegungsgeschwindigkeit eines mindestens teilweise magnetisierten Körpers erlaubt, wobei die den verschiedenen Bewegungskoordinaten zugeordneten Induktionsspannungen mit einem Minimum an gegenseitiger Überlagerung sowie gleichzeitig mit weitgehender Unempfindlichkeit gegenüber äußeren Störfeldern gewonnen werden können.

Diese Aufgabe wird gemäß der Erfindung durch die im Patentanspruch 1 angegebene Ausbildung des Spulensystems gelöst. Mit dieser Anordnung der Spulen läßt sich die Bewegungsgeschwindigkeit des Körpers weitgehend frei von Störfeldeinflüssen abtasten. Die jeweils abtastbare Bewegungskoordinate hängt lediglich von der gegenseitigen Verschaltung der Spulen ab. Es ist im erfindungsgemäßen Spulensystem stets die der Bewegungskoordinate entsprechende Induktionsspannung gewinnbar, während die aus anderen Bewegungsrichtungen des Körpers resultierenden Induktionsspannungen sich jeweils kompensieren.

In spezieller Ausbildung der Erfindung ist es vorgesehen, alle vier Spulen mit gleicher Polarität parallel und/oder hintereinander zu schalten, Patentanspruch 2. Eine solche Schaltung eignet sich in vorteilhafter Weise zum Zwecke der Abtastung translatorischer Bewegungsgeschwindigkeiten des Körpers parallel zur vorgegebenen Achse. Werden die jeweils auf einer der Seite der vorgegebenen Achse gelegenen Spulen mit gleicher Polarität verschaltet, und die jeweils bezüglich der vorgegebenen Achse gegenüberliegenden Spulen mit entgegengesetzter Polarität, Patentanspruch 3, so dient das Spulensystem bevorzugt zur Abtastung translatorischer Bewegungsgeschwindigkeiten des Körpers senkrecht zur vorgegebenen Achse und parallel zur Ebene, in der die Spulenachsen liegen. Zum Zwecke der Abtastung der rotatorischen Bewegungsgeschwindigkeiten des Körpers um eine Achse senkrecht zur Ebene, in der die Spulenachsen liegen, sind die Spulen, wie in Patentanspruch 4 angegeben, mit wechselnder Polarität verschaltet.

Eine weitere Ausgestaltung des Spulensystems nach Patentanspruch 5 besteht darin, die Spulen mit einem elektronischen Netzwerk mit Umkehrverstärkern und Summierverstärkern so zu verschalten, daß an getrennten Ausgängen des Netzwerkes abrufbare elektrische Signale zur Verfügung stehen, die den Bewegungsgeschwindigeiten des Körpers parallel zur vorgegebenen Achse, senkrecht zu dieser Achse und parallel zur oben bezeichneten Ebene sowie um eine vorgegebene Achse senkrecht zu dieser Ebene proportional sind.

Zur Bestimmung der Drehrichtung des Körpers ist es zweckmäßig mit dem vorbeschriebenen Spulensystem ein zweites, gleichartiges Spulensystem zu kombinieren und letzteres in einer Ebene anzuordnen, die sich mit der Ebene, in der die Spulenachsen des ersten Spulensystems liegen, auf der vorgegebenen Achse in einem Winkel schneidet, Patentanspruch 6. Bevorzugt beträgt dieser Winkel 90°.

Das Spulensystem ist mit Vorteil zur Abtastung der Drehfrequenz eines Körpers um die vorgegebene Achse, insbesondere zur Abtastung der Drehfrequenz von Rotoren in Gasreibungsvakuummetern geeignet, Patentansprüche 7 und 8. Darüber hinaus sind Präzessions- und/oder Nutationsbewegungen an Rotoren mit hoher Drehfrequenz abtastbar, Patentanspruch 9.

Nachfolgend wird die Erfindung anhand von Ausführungsbeispielen näher beschrieben, die in der Zeichnung schematisch dargestellt sind. Die Zeichnung zeigt im einzelnen

Figur 1 Spulensystem mit vier Spulen in einer Ebene,
Figur 2 elektronisches Netzwerk für ein Spulensystem nach Figur 1,
Figur 3 Spulensystem mit acht Spulen in zwei Ebenen.

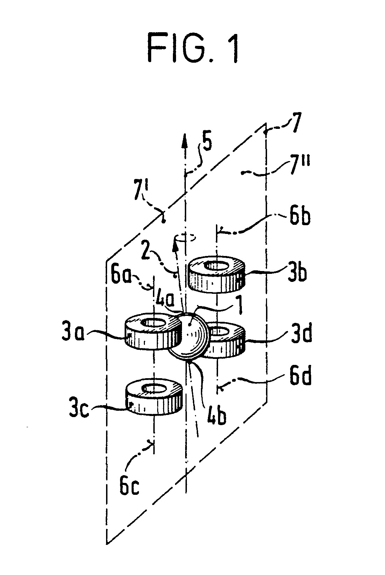

In Figur 1 ist schematisch ein Spulensystem dargestellt, das zur Abtastung der Bewegungsgeschwindigkeit eines magnetisierten Körpers 1 dient. Im Ausführungsbeispiel handelt es sich bei dem Körper 1 um eine magnetisch gelagerte Stahlkugel, die im wesentlichen parallel zu einer vorgegebenen Achse magnetisiert ist. Im Ausführungsbeispiel nach Figur 1 verläuft die Magnetisierungsachse 2 des Körpers 1 nur sehr schwach geneigt gegenüber der vorgegebenen Achse, hier der Rotationsachse 5 des Körpers 1. Die vorgegebene Achse wird im folgenden deshalb "Rotationsachse" genannt. Das Spulensystem weist vier Spulen 3a, 3b, 3c, 3d auf, von denen je zwei Spulen in der Umgebung von durch die Magnetisierung des Körpers gebildeten magnetischen Polen 4a, 4b mit Abstand vom Körper 1 angeordnet sind.

In Figur 1 sind die Magnete, die zur magnetischen Lagerung des Körpers 1 erforderlich sind, nicht dargestellt. Mit den Spulen 3a bis 3d werden keine magnetischen Felder erzeugt, die die Kugel 1 in ihrer in Figur 1 dargestellten Lage halten.

Die Spulen 3a bis 3d sind im Bereich der magnetischen Pole 4a, 4b derart angeordnet, daß die Rotationsachse 5 und Spulenachsen 6a, 6b, 6c, 6d der Spulen 3a bis 3d gemeinsam in einer Ebene 7 liegen und in dieser Ebene parallel zueinander verlaufen.

In den Spulen 3a bis 3d werden der Bewegungsgeschwindigkeit des Körpers proportionale Induktionsspannungen erzeugt. Die jeweils abtastbare Bewegungsgeschwindigkeit für eine Bewegungskoordinate hängt von der gegenseitigen Verschaltung der Spulen ab. Zur Beschreibung dieser Wirkungsweise des Spulensystems wird nachfolgend stets davon ausgegangen, daß alle vier Spulen mit gleichem Wicklungssinn angeordnet sind. Dies ist jedoch nicht Voraussetzung für die gewünschte Wirkungsweise des Spulensystems. Es kommt vielmehr auf die Polarität der Induktionsspannungen an, die in den vier Spulen erzeugt werden, wie im folgenden ausgeführt wird.

Bei einer translatorischen Bewegung des Körpers 1 in Richtung der Rotationsachse 5 werden in den Spulen 3a und 3c, die in der Ebene 7 in Figur 1 links von der Rotationsachse 5, nämlich Seite 7' der Ebene 7 angeordnet sind, Induktionsspannungen gleicher Polarität induziert. Dies deshalb, weil sich der eine magnetische Pol, also beispielsweise der magnetische Nordpol, auf eine dieser Spulen zubewegt, während sich der andere magnetische Pol, der magnetische Südpol, gleichzeitig von der jeweils anderen Spule fortbewegt. Aus Symmetriegründen werden in den Spulen 3b, 3d, die in Figur 1 rechts von der Rotationsachse 5, auf Seite 7'' der Ebene 7 angeordnet sind, dieselben Signale induziert, wie in den entsprechenden Spulen 3a, 3c auf der Seite 7'.

Die Polarität der durch die Bewegung des Körpers hervorgerufenen Induktionsspannungen an den vier Spulen läßt sich durch eine Folge von jeder Spule 3a, 3b, 3c, 3d zuzuordnenden Vorzeichen darstellen. Im folgenden wird das Polarisationsschema für das Spulensystem stets in der Reihenfolge Spule 3a, Spule 3b, Spule 3c, Spule 3d angegeben. Für den im vorangehenden Absatz beschriebenen Fall der translatorischen Bewegung des Körpers 1 in Richtung der Rotationsachse 5 gilt dann das Polarisationsschema $(+ + + +)$ bzw., was gleichbedeutend ist, $(- - - -)$. Durch gleichsinniges Hintereinander- oder Parallelschalten aller vier Spulen läßt sich also eine Induktionsspannung gewinnen, die der translatorischen Bewegungsgeschwindigkeit des Rotors in Richtung einer Bewegungskoordinate, die mit der Rotationsachse 5 parallel läuft, proportional ist.

Wenn der magnetische Körper 1 bei der in Figur 1 dargestellten Spulenanordnung seitliche Translationsbewegungen ausführt, d.h. also, daß sich der Körper senkrecht zur Rotationsachse 5 bewegt, die Rotationsachse 5 also parallel verschoben wird, insbesondere bei einer Parallelverschiebung der Rotationsachse 5 innerhalb der Spulenebene 7, dann werden in den Spulen 3a und 3c auf der Seite 7' der Ebene 7 Induktionsspannungen mit entgegengesetzter Polarität erzeugt, denn es führen die magnetisch entgegengesetzt magnetisierten Pole 4a, 4b des Körpers 1 eine bezüglich der Spulen 3a und 3c gleichgerichtete Bewegung aus. Entsprechendes gilt für die Spulen 3b und 3d auf der Seite 7" der Ebene 7. In den bezüglich der Rotationsachse 5 in der Ebene 7 gegenüberliegenden Spulen 3a und 3b werden Spannungen entgegengesetzter Polarität induziert, weil der magnetische Pol 4a, in dessen Bereich sie angeordnet sind, sich bei einer seitlichen Translationsbewegung des Körpers auf die eine der Spulen zubewegt und von der anderen Spule entfernt. Entsprechendes gilt für die Spulen 3c und 3d, die im Bereich des magnetischen Pols 4b angeordnet sind. Insgesamt ergibt sich also bei einer seitlichen, translatorischen Bewegung des Körpers ein Polarisationsschema $(+ - - +)$ bzw. $(- + + -)$. Durch gleichsinnige Parallel- bzw. Serienschaltung der Spulenpaare 3a, 3d und 3b, 3c sowie gegensinnige Parallel- bzw. Hintereinanderschaltung der Spulenpaare 3a, 3b und 3d, 3c läßt sich somit eine Abtastspannung gewinnen, die der Bewegungsgeschwindigkeit des Körpers in der Ebene 7 senkrecht zur Rotationsachse 5 proportional ist.

Wenn der Körper schließlich Drehbewegungen um eine Normale zur Ebene 7 ausführt, d.h. um eine Achse senkrecht zur Ebene 7, ergibt sich aus entsprechenden Überlegungen ein drittes Polarisationsschema, nämlich das Schema $(+ - + -)$ bzw. $(- + - +)$. Mit einer diesem Polarisationsschema entsprechenden Verschaltung der vier Spulen 3a bis 3d ist eine Abtastspannung gewinnbar, die der Winkelgeschwindigkeit des Körpers um die vorgenannte Normale zur Ebene 7 proportional ist. Dies gilt allerdings nur für kleine Winkelabweichungen der Magnetisierungsachse 2 von der Rotationsachse 5, d.h. also unter der Voraussetzung, daß die Magnetisierung des Körpers im wesentlichen parallel zur Rotationsachse 5 ausgerichtet ist. Bei größeren Winkelabweichungen ist die erfindungsgemäße Zuordnung zwischen magnetischen Polen und Spulen und das sich daraus ergebene Polarisationsschema nicht mehr hinreichend gegeben.

Die zuletzt beschriebene Verschaltung des Spulensystems ist insbesondere geeignet zur Abtastung der Drehfrequenz eines Rotors um dessen Rotationsachse. Voraussetzung ist dabei, wie oben bereits angegeben, daß zwischen der Rotationsachse 5 und der Magnetisierungsachse 2 des Rotors nur eine kleine Winkelabweichung besteht. Denn die auf die Ebene 7 projizierte Bewegung der Magnetisierungsachse hat dann dieselbe Wirkung wie eine periodische Drehbewegung des Rotors mit kleiner Winkelamplitude um eine Normale zur Ebene 7. Die Abtastfrequenz ist dann gleich der Rotationsfrequenz.

Die angegebenen Polarisationsschemen verdeutlichen die erforderlichen Verschaltungen des erfindungsgemäßen Spulensystems zur Ermittlung der Bewegungsgeschwindigkeit des Körpers in Richtung jeweils einer zugeordneten Bewegungskoordinate, d.h. also, daß bei entsprechender Verschaltung eine Induktionsspannung gewonnen wird, die der Bewegungsgeschwindigkeit in einer der Bewegungskoordinaten proportional ist. Die nicht der abgetasteten Bewegungskoordinaten entsprechenden, aus anderen Bewegungsrichtungen resultierenden Induktionsspannungen kompensieren sich jeweils.

Betrachtet man den Einfluß äußerer Störfelder, so ergibt sich folgendes: Senkrecht zur Rotationsachse 5 verlaufende Störfelder ergeben in den Spulen keine Induktionsspannungen, weil alle Spulenachsen senkrecht zum Störfeld verlaufen; parallel zur Rotationsachse bzw. zu den Spulenachsen verlaufende äußere Störfelder stören nur im Falle des Polarisationsschemas $(+ + + +)$ bzw. $(- - - -)$. Bei allen anderen Polarisationsschemen löschen sich die von den Störfeldern erzeugten Induktionsspannungen gegenseitig aus.

Eine gegenüber äußeren Störfeldern unempfindliche Abtastung translatorischer Bewegungen in Richtung der Rotationsachse 5 kann dadurch erzielt werden, daß die Spulenpaare 3a, 3b und 3c, 3d in der Nähe von gleichnamigen magnetischen Polen 4a, 4b angeordnet werden. Das zugehörige Polarisationsschema ist in diesem Falle $(+ + - -)$ bzw. $(- - + +)$. Durch die gemischten Polaritäten der einzelnen Spulen ergibt sich wiederum die Kompensation von Induktionsspannungen, die durch die äußeren Störfelder hervorgerufen werden. Für die oben angegebenen übrigen Bewegungskoordinaten kehrt sich bei gleichnamigen magnetischen Polen die Zuordnung von Polarisationsschema und Bewegungsrichtung um, d.h., bei seitlicher Translationsbewegung gilt das Polarisationsschema $(+ - + -)$ bzw. $(- + - +)$ und für Drehbewegungen des Körpers das Polarisationsschema $(+ - - +)$ bzw. $(- + + -)$.

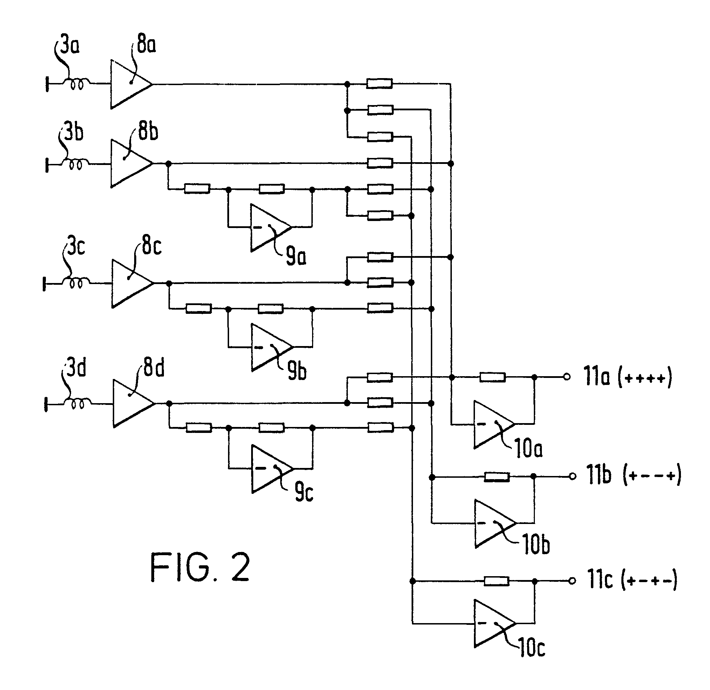

Obwohl in vielen Fällen die Abtastung nur einer Bewegungskoordinate erforderlich ist, beispielsweise im Falle der Drehzahlabtastung von Rotoren in Gasreibungsvakuummetern, erscheint es sinnvoll, ein Spulensystem der erfindungsgemäßen Art gleichzeitig zur Abtastung der Bewegungsgeschwindigkeit in verschiedenen Bewegungskoordinaten auszunutzen. Zu diesem Zweck dient ein in Figur 2 dargestelltes elektronisches Netzwerk. In diesem Netzwerk werden die in den Spulen 3a bis 3d gewonnenen Induktionsspannungen zunächst mittels der Verstärker 8a bis 8d vorverstärkt. Danach werden mittels der Umkehrverstärker 9a, 9b, 9c Spannungen der jeweils entgegengesetzten Polarität gewonnen.

Schließlich werden mittels der Summierverstärker 10a, 10b, 10c drei zusammengesetze Ausgangsspannungen erzeugt, die den oben beschriebenen Polarisationsschemen entsprechen. An Ausgängen 11a, 11b, 11c des Netzwerkes stehen somit Abtastspannungen für die translatorische Bewegung des Körpers parallel zu dessen Rotationsachse, Ausgang 11a (Polarisationsschema bzw. (+ + + +) bzw. (− − − −)), ferner für die translatorische Bewegung in der Ebene 7 senkrecht zur Rotationsachse, Ausgang 11b (Polarisationsschema (+ − − +) bzw. (− + + −)), und schließlich für kleine Winkelbewegungen um eine Normale zur Ebene 7, Ausgang 11c (Polarisationsschema (+ − + −) bzw. (− + − +)), zur Verfügung. Die am Ausgang 11c abgetasteten Signale können zur Bestimmung der Drehfrequenz verwendet werden, soweit die Magnetisierungsachse 2 zur Rotationsachse 5 des Körpers eine kleine Winkelabweichung aufweist.

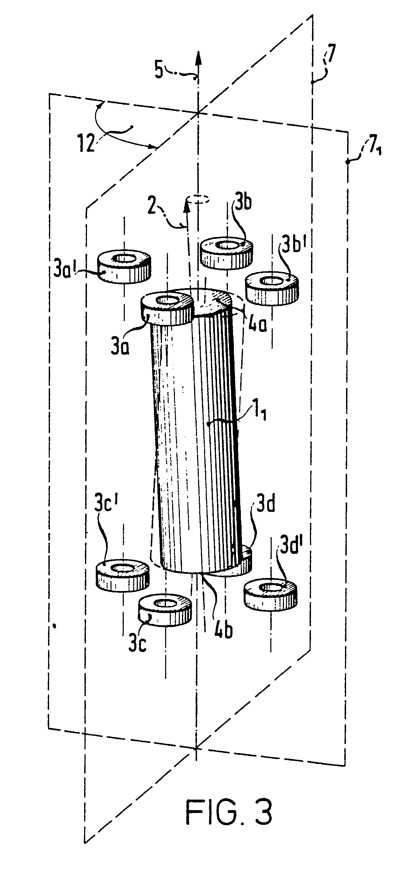

Zwei Spulensysteme mit zwei Ebenen 7 und $7_1$, die sich auf der Rotationsachse 5 eines im Ausführungsbeispiel zylindrischen Körpers $1_1$ in einem Winkel 12 von 90° schneiden, sind in Figur 3 dargestellt. Mit einem solchen Spulensystem läßt sich die Bewegung des zylindrischen Körpers 11 in allen sechs Bewegungskoordinaten abtasten. Auch im Ausführungsbeispiel nach Figur 3 sind von den jeweils vier Spulen in einer Ebene $7_1$ oder 7 je zwei Spulen im Bereich der magnetischen Pole 4a, 4b des zylindrischen Körpers angeordnet. Ein solches Spulensystem ist insbesondere geeignet, den Drehsinn des rotierenden Körpers zu ermitteln, da die umlaufende Magnetisierungsachse 2 im Spulensystem einen dem Drehsinn entsprechenden Phasenverlauf der erzeugten Induktionsspannungen verursacht. Dies ist von Bedeutung für das Erkennen und Aufbereiten von Signalen, die durch Präzessions- und Nutationsbewegungen von Rotoren mit hoher Drehfrequenz hervorgerufen werden. Abtastsignale dieser Art können in Verbindung mit elektronischen Antriebselementen zur Dämpfung solcher Bewegungen verwendet werden.

## Patentansprüche

1. Spulensystem zur induktiven Abtastung der Bewegungsgeschwindigkeit eines zumindest in Teilbereichen magnetisierten Körpers (1, $1_1$) mit zwei durch die Magnetisierung des Körpers gebildeten magnetischen Polen (4a, 4b) wobei die durch die magnetischen Pole verlaufende Magnetisierungsachse (2) mit einer vorgegebenen Achse (5) des Körpers zusammenfällt oder nur schwach geneigt dazu ausgerichtet ist, bestehend aus mehreren elektrischen Spulen (3a bis 3d) die räumlich voneinander getrennt in der Umgebung von magnetisierten Bereichen des Körpers (1, $1_1$) mit Abstand vom Körper angeordnet sind, und in denen der Bewegungsgeschwindigkeit des Körpers proportionale Induktionsspannungen erzeugt werden wobei zwei Spulenpaare mit parallel zueinander und parallel zur vorgegebenen Achse (5) verlaufenden Spulenachsen (6a, 6b, 6c, 6d) vorgesehen sind, und wobei die Spulenachsen (6a, 6b, 6c, 6d) und die vorgegebene Achse (5) in einer Ebene (7) liegen,
dadurch gekennzeichnet, daß je eines der Spulenpaare (3a, 3b; 3c, 3d) an den magnetischen Polen (4a, 4b) symmetrisch zur vorgegebenen Achse (5) angeordnet ist.

2. Spulensystem nach Anspruch 1, dadurch gekennzeichnet daß alle vier Spulen (3a bis 3d) mit gleicher Polarität parallel- und/oder hintereinandergeschaltet sind.

3. Spulensystem nach Anspruch 1, dadurch gekennzeichnet daß die innerhalb der Ebene (7) auf einer Seite der vorgegebenen Achse (5) gelegenen Spulen (3a, 3c bzw. 3b, 3d) mit gleicher Polarität, und die bezüglich der vorgegebenen Achse (5) gegenüberliegenden Spulen (3a gegenüber 3b, bzw. 3c gegenüber 3d) mit entgegengesetzten Polarität verschaltet sind.

4. Spulensystem nach Anspruch 1, dadurch gekennzeichnet daß die innerhalb der Ebene (7) auf einer Seite der vorgegebenen Achse (5) gelegenen Spulen (3a, 3c bzw. 3b, 3d) mit entgegengesetzter Polarität verschaltet sind, und bezüglich der vorgegebenen Achse (5) gegenüberliegende Spulen (3a gegenüber 3b, bzw. 3c gegenüber 3d) ebenfalls mit entgegengesetzter Polarität verschaltet sind.

5. Spulensystem nach Ansprüchen 1 bis 4, gekennzeichnet durch eine Verschaltung der Spulen (3a, 3b, 3c, 3d) mit einem elektronischen Netzwerk mit Umkehrverstärkern (9a, 9b, 9c) und Summierverstärkern (10a, 10b, 10c) in der Weise, daß an Ausgängen (11a, 11b, 11c) des Netzwerkes elektrische Signale zur Verfügung stehen, die entweder
a) einer Parallel- und/oder Hintereinanderschaltung aller vier Spulen (3a bis 3d) mit gleicher Polarität (Ausgang 11a), oder
b) einer Verschaltung von innerhalb der Ebene (7) auf einer Seite der vorgegebenen Achse (5) gelegenen Spulen (3a, 3c bzw. 3b, 3d) mit gleicher Polarität, und von bezüglich der vorgegebenen Achse (5) gegenüberliegenden Spulen (3a gegenüber 3b, bzw. 3c gegenüber 3d) mit entgegengesetzter Polarität (Ausgang 11b), oder

c) einer Verschaltung von innerhalb der Ebene (7) auf einer Seite der vorgegebene Achse (5) gelegenen Spulen (3a, 3c bzw. 3b, 3d) mit entgegengesetzter Polarität, und von bezüglich der vorgegebenen Achse (5) gegenüberliegenden Spulen (3a gegenüber 3b, bzw. 3c gegenüber 3d) ebenfalls mit entgegengesetzter Polarität entsprechen.

6. Kombination von zwei Spulensystemen nach einem der Ansprüche 1 bis 5,

dadurch gekennzeichnet, daß sich die Ebenen (7, 7₁), in denen sich die beiden Spulensysteme (3a bis 3d; 3a' bis 3d') befinden, unter einem Winkel (12) schneiden und die Schnittlinie die vorgegebene Achse (5) beider Spulensysteme darstellt.

7. Verwendung eines Spulensystems nach einem der vorhergehenden Ansprüche zur Abtastung der Drehfrequenz eines zumindest in Teilbereichen magnetisierten Körpers um eine Rotationsachse, wobei die Rotationsachse und die vorgegebene Achse (5) identisch sind.

8. Verwendung eines Spulensystems nach einem der Ansprüche 1 bis 6 zur Abtastung der Drehfrequenz von Rotoren in Gasreibungsvakuummetern.

9. Verwendung eines Spulensystems nach Anspruch 6 zur Abtastung von Präzessions- und/oder Nutationsbewegungen von Rotoren mit hoher Drehfrequenz.


**Claims**

1. Coil system for the inductive sensing of the velocity of movement of an object (1, 1₁) which is magnetized at least in part areas, having two magnetic poles (4a, 4b) formed by the magnetization of the object, the axis (2) of magnetization extending through the magnetic poles coinciding with a predetermined axis (5) of the object or being aligned with only a slight inclination with respect to this axis, consisting of several electric coils (3a to 3d) which are arranged, spatially separated from one another, in the vicinity of magnetized areas of the object (1, 1₁) at a distance from the object, and in which induction voltages proportional to the velocity of movement of the object are generated, in which system two coil pairs are provided with coil axes (6a, 6b, 6c, 6d) which extend parallel to one another and parallel to the predetermined axis (5) and in which system the coil axes (6a, 6b, 6c, 6d) and the predetermined axis (5) are located in one plane (7), characterized in that one of the coil pairs (3a, 3b; 3c, 3d) each is arranged symmetrically with respect to the predetermined axis (5) at the magnetic poles (4a, 4b).

2. Coil system according to Claim 1, characterized in that all four coils (3a to 3d) are connected in parallel and/or in series with one another with the same polarity.

3. Coil system according to Claim 1, characterized in that the coils (3a, 3c and 3b, 3d) located on one side of the predetermined axis (5) within the plane (7) are connected together with the same polarity and the coils located opposite with respect to the predetermined axis (5) (3a opposite to 3b and 3c opposite to 3d) are connected together with the opposite polarity.

4. Coil system according to Claim 1, characterized in that the coils (3a, 3c and 3b, 3d) located on one side of the predetermined axis (5) within the plane (7) are connected together with the opposite polarity and coils located opposite with respect to the predetermined axis (5) (3a opposite to 3b and 3c opposite to 3d) are also connected together with the opposite polarity.

5. Coil system according to Claims 1 to 4, characterized by the coils (3a, 3b, 3c, 3d) being connected together with an electronic network having inverting amplifiers (9a, 9b, 9c) and summing amplifiers (10a, 10b, 10c) in such a manner that at outputs (11a, 11b, 11c) of the network electric signals are available which correspond either

a) to all four coils (3a to 3d) being connected in parallel and/or in series with the same polarity (output 11a), or

b) coils (3a, 3c and 3b, 3d) located on one side of the predetermined axis (5) within the plane (7)· being connected together with the same polarity and coils located opposite with respect to the predetermined axis (5) (3a opposite to 3b, and 3c opposite to 3d) being connected together with the opposite polarity (output 11b), or

c) coils (3a, 3c and 3b, 3d) located on one side of the predetermined axis (5) within the plane (7) being connected together with opposite polarity and coils located opposite with respect to the predetermined axis (5) (3a opposite to 3b, and 3c opposite to 3d) also being connected together with the opposite polarity.

6. Combination of two coil systems according to one of claims 1 to 5, characterized in that the planes (7, 7₁), in which the two coil systems (3a to 3d; 3a' to 3d') are located, intersect at an angle (12) and the line of intersection represents the predetermined axis (5) of the two coil systems.

7. Use of a coil system according to one of the preceding claims for sensing the rate of rotation of an object, which is magnetized at least in part areas, around an axis of rotation, the axis of rotation and the predetermined axis (5) being identical.

8. Use of a coil system according to one of Claims 1 to 6 for sensing the rate of rotation of rotors in gas friction vacuum gauges.

9. Use of a coil system according to Claim 6 for sensing precessions and/or nut at ions of rotors having a high rate of rotation.

## Revendications

1. Système de bobines pour la détection par induction de la vitesse de mouvement d'un corps (1, $1_1$) magnétisé au moins dans certaines zones et présentant deux pôles magnétiques (4a, 4b) formés par la magnétisation du corps, l'axe de magnétisation (2), passant par les pôles magnétiques, coïncidant avec un axe prédéterminé (5) du corps ou ayant une orientation qui est seulement incliné légèrement par rapport à cet axe prédéterminé, système qui est composé de plusieurs bobines électriques (3a à 3d) qui sont disposées à proximité de zones magnétiséés du corps (1, $1_1$), à distance de ce corps et en étant séparées les unes des autres dans l'espace, et dans lesquelles sont produites des tensions induites proportionnelles à la vitesse de mouvement du corps, avec prévision de deux paires de bobines dont les axes (6a, 6b, 6c, 6d) sont parallèles entre eux et à l'axe prédéterminé (5), les axes (6a, 6b, 6c, 6d) des bobines et l'axe prédéterminé (5) étant situés dans un plan (7), caractérisé en ce que chacune des paires des bobines (3a, 3b; 3c, 3d) est disposée symétriquement par rapport à l'axe prédéterminé (5) près d'un des pôles magnétiques (4a, 4b).

2. Système selon la revendication 1, caractérisé en ce que toutes les quatre bobines (3a à 3d) sont montées en parallèle et/ou en série, avec la même polarité.

3. Système selon la revendication 1, caractérisé en ce que les bobines (3a, 3c ou 3b, 3d) situées dans le plan (7) d'un côté de l'axe prédéterminé (5) sont interconnectées avec la même polarité et les bobines situées à l'opposé, par rapport à l'axe prédéterminé (5) (3a à l'opposé de 3b et 3c à l'opposé de 3d) sont interconnectées avec des polarités contraires.

4. Système selon la revendication 1, caractérisé en ce que les bobines (3a, 3c ou 3b, 3d) situées dans le plan (7) d'un côté de l'axe prédéterminé (5) sont interconnectées avec des polarités contraires et les bobines situées à l'opposé, par rapport à l'axe prédéterminé (5) (3a à l'opposé de 3b et 3c à l'opposé de 3d) sont également interconnectées avec des polarités contraires.

5. Système selon les revendications 1 à 4, caractérisé par l'incorporation des bobines (3a, 3b, 3c, 3d) dans un réseau électronique comportant des amplificateurs inverseurs (9a, 9b, 9c) et des amplificateurs d'addition (10a, 10b, 10c) de manière que soient disponibles, sur des sorties (11a, 11b, 11c) du réseau, des signaux électriques qui correspondent, soit à

a) un montage en parallèle et/ou en série de toutes les quatre bobines (3a à 3d), avec la même polarité (sortie 11a),

soit à

b) un montage de bobines (3a, 3c ou 3b, 3d) situées dans le plan (7) d'un côté de l'axe prédéterminé (5) avec la même polarité et un montage de bobines opposées, par rapport à l'axe prédéterminé (5) (3a à l'opposé de 3b et 3c à l'opposé de 3d) avec des polarités contraires (sortie 11b),

ou

c) un montage de bobines (3a, 3c ou 3b, 3d) situées dans le plan (7) d'un côté de l'axe prédéterminé (5) avec des polarités contraires et un montage de bobines opposées, par rapport à l'axe prédéterminé (5) (3a à l'opposé de 3b ou 3c à l'opposé de 3d) également avec des polarités contraires.

6. Combinaison de deux systèmes de bobines selon une des revendications 1 à 5, caractérisée en ce que les plans (7, $7_1$) dans lesquels se trouvent les deux systèmes de bobines (3a à 3d; 3a' à 3d') se coupent sous un angle (12) et la ligne d'intersection des plans représente l'axe prédéterminé (5) des deux systèmes de bobines.

7. Utilisation d'un système de bobines selon une des revendications précédentes pour détecter la fréquence de rotation, autour d'un axe de rotation, d'un corps magnétisé au moins dans certaines zones, dans laquelle l'axe de rotation et l'axe prédéterminé (5) sont identiques.

8. Utilisation d'un système de bobines selon une des revendications 1 à 6 pour détecter la fréquence de rotation de rotors dans des instruments de mesure du vide à frottement de gaz.

9. Utilisation d'un système de bobines selon la revendication 6 pour détecter des mouvements de précession et/ou de nutation de rotors à haute fréquence de rotation.

# FIG. 1

FIG. 2

FIG. 3